# FASCICULE DE BREVET EUROPEEN

(11) **EP 1 332 058 B1**
(45) Date de publication et mention de la délivrance du brevet: **31.05.2006**
(21) Numéro de dépôt: 01992650.0
(22) Date de dépôt: 06.11.2001
(51) Int. Cl.: B60J 7/02

(54) **TOIT ESCAMOTABLE POUR VEHICULE A ELEMENTS PIVOTANTS, COULISSANTS AVEC DEUX BRAS**
EINZIEHBARES FAHRZEUGDACH MIT SCHWENKELEMENTEN, DIE MITTELS ZWEIER ARME VERSCHIEBBAR SIND
VEHICLE RETRACTABLE ROOF WITH PIVOTING ELEMENTS, SLIDING WITH TWO ARMS

(30) Priorité: 06.11.2000 FR 0014186
(43) Date de publication de la demande: 06.08.2003
(73) Titulaire: France Design, 79140 Cerizay (FR)
(72) Inventeur: QUEVEAU, Gérard, F-79140 Le Pin (FR); GUILLEZ, Jean-Marc, F-79140 Cirières (FR)
(74) Mandataire: Geismar, Thierry
(86) Numéro de dépôt international: PCT/FR2001/003434
(87) Numéro de publication internationale: WO 2002/036376

(56) Documents cités:
- DE-A- 3 903 358
- DE-C- 19 930 616
- US-A- 2 768 024

## Description

La présente invention concerne un toit escamotable ou rétractable dans le coffre arrière d'un véhicule.

Un tel toit escamotable permet notamment de transformer un véhicule du type coupé à deux places ou coupé ou berline à quatre places en un véhicule du type cabriolet.

Dans le cas des coupés ou berlines à quatre places, le toit présente une longueur relativement importante, de sorte que le toit escamotable est composé de trois éléments dont chacun a une longueur compatible avec les dimensions du coffre du véhicule.

On connaît ainsi un toit escamotable pour véhicule, comprenant un élément du toit avant, un élément de toit intermédiaire et un élément de toit arrière, ces trois éléments étant mobiles entre une position dans laquelle, ils recouvrent l'habitacle du véhicule et une position dans laquelle, ils sont superposés sensiblement horizontalement dans le coffre arrière du véhicule.

Un tel toit escamotable est, par exemple, connu du document DE-A-39 03 358.

Le but de la présente invention est d'apporter des perfectionnements aux moyens connus, pour commander et guider d'une manière optimale le déplacement des éléments du toit entre leur position de fermeture et leur position de rangement dans le coffre.

Selon l'invention, le toit escamotable est caractérisé en ce que le déplacement de l'élément arrière vers le coffre est commandé par au moins un bras articulé au châssis du véhicule et à l'élément arrière, en ce que l'avant de l'élément arrière est relié de façon articulée à l'élément intermédiaire par un premier levier, un second levier reliant de façon articulée l'élément intermédiaire à un point d'articulation fixe du châssis, en ce que l'élément intermédiaire comporte une glissière s'étendant entre ses bords avant et arrière, un doigt solidaire de l'arrière de l'élément avant étant engagé dans ladite glissière pour que l'élément avant puisse coulisser sur l'élément intermédiaire, en ce que la partie avant de l'élément intermédiaire est reliée de façon articulée à l'élément avant par un levier, ce levier étant lui-même relié de façon articulée audit second levier par une biellette, et en ce que des moyens de liaison sont prévus entre le bras et le second levier ou entre le bras et le premier levier reliant l'élément arrière à l'élément intermédiaire ou entre le premier levier et un point d'articulation fixe du châssis.

D'autres particularités et avantages de l'invention apparaîtront encore dans la description ci-après.

Aux dessins annexés, donnés à titre d'exemples non limitatifs :
- La figure 1 est une vue schématique en coupe longitudinale partielle d'un véhicule équipé d'un toit escamotable selon l'invention, en position fermée ;
- La figure 2 est une vue analogue à la figure 1, le toit escamotable étant dans une position intermédiaire ;
- La figure 3 est une vue analogue aux figures 1 et 2, le toit escamotable étant en position rangée dans le coffre du véhicule.

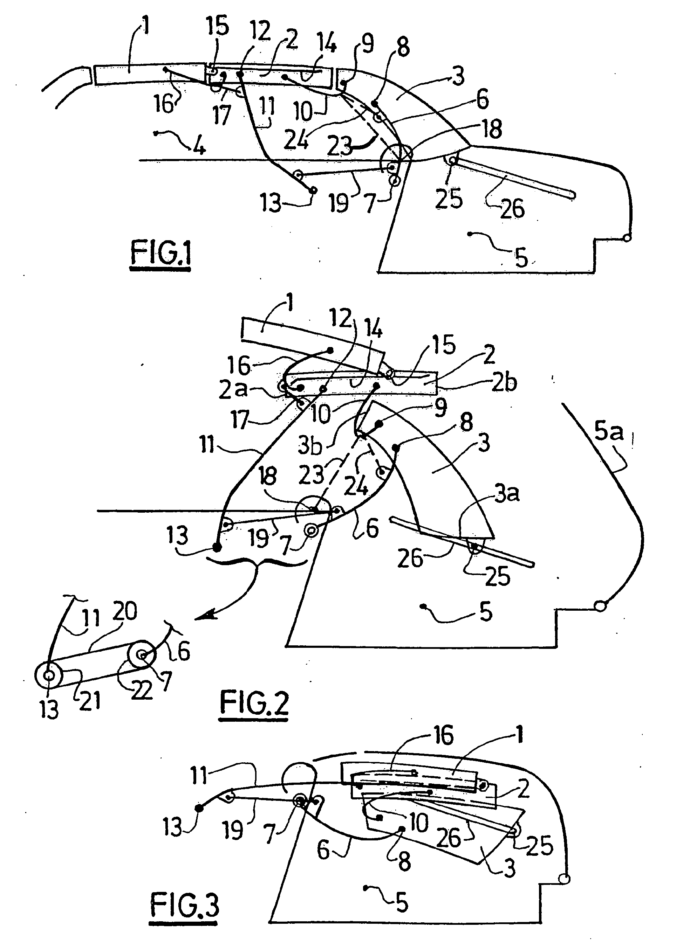

Dans la réalisation représentée sur les figures 1 à 3, le toit escamotable comprend un élément de toit avant 1, un élément de toit intermédiaire 2 et un élément de toit arrière 3. Ces trois éléments 1, 2, 3 sont mobiles entre une position dans laquelle (voir figure 1), ils recouvrent l'habitacle 4 du véhicule et une position dans laquelle (voir figure 3), ils sont superposés sensiblement horizontalement dans le coffre arrière 5 du véhicule.

Conformément à l'invention, le déplacement de l'élément arrière 3, vers le coffre 5 est commandé par un bras 6 articulé en 7 au châssis du véhicule et en 8 à l'élément arrière 3 en ce que l'avant 3b de l'élément arrière 3 est relié de façon articulée en 9 à l'élément intermédiaire 2 par un premier levier 10, un second levier 11 reliant de façon articulée en 12 l'élément intermédiaire 2 à un point d'articulation fixe 13 du châssis.

L'élément intermédiaire 2 comporte une glissière s'étendant entre ses bords avant 2a et arrière 2b. Un doigt 15 solidaire de l'arrière de l'élément avant 1 est engagé dans la glissière 14 pour que l'élément avant 1 puisse coulisser sur l'élément intermédiaire 2.

Par ailleurs, la partie avant 2a de l'élément intermédiaire 2 est reliée de façon articulée à l'élément avant 1 par un levier 16. Ce levier 16 est lui-même relié de façon articulée audit second levier par une biellette 17.

D'autre part, des moyens de liaison sont prévus entre le bras 6 et le second levier 11 ou entre le bras 6 et le levier 10 reliant l'élément arrière 3 à l'élément intermédiaire 2 ou entre ce dernier levier 10 et un point d'articulation fixe 18 du châssis.

Dans une première version les moyens de liaison précités comprennent une biellette 19 articulée au bras 6 et au second levier 11. Cette biellette 19 peut être remplacée (voir figure 2) par une chaîne 20 ou une courroie crantée enroulée autour de deux pignons 21, 22 montés sur les axes 13, 7 du levier 11 et du bras 6 et solidaires de ceux-ci.

Dans une deuxième version, un levier 23 est articulé au levier 10 reliant l'élément arrière 3 et l'élément intermédiaire 2 et à un point d'articulation fixe 18 du châssis.

Dans une troisième version, les moyens de liaison comprennent une biellette 24 articulée au bras 6 et au levier 10 reliant les éléments arrière 3 et intermédiaire 2.

Dans l'exemple représenté, le déplacement de l'élément arrière 3 vers le coffre 5 est en outre commandé par un doigt 25 porté par la partie arrière 3a de l'élément arrière 3 engagé de façon coulissante dans une glissière 26 s'étendant à l'intérieur du coffre 5.

Au lieu du doigt 25 et de la glissière 26, le déplacement de l'élément arrière 3 vers le coffre 5 peut être commandé par un second bras articulé au châssis et à la partie arrière 3a de l'élément arrière 3.

Le toit escamotable que l'on vient de décrire fonctionne de la manière suivante :

Après déverrouillage des éléments 1, 2, 3 et ouverture du couvercle 5a du coffre 5, le pivotement du bras 6 vers l'arrière commandé par un moteur ou un vérin déplace l'élément arrière 3 vers le coffre 5. Le mouvement de l'élément 3 est guidé par le doigt 25 qui coulisse le long de la glissière 26.

Le pivotement du bras 6 provoque le basculement des leviers 10 et 11 grâce aux moyens de liaison, tels que la biellette 19, ou 23, ou 24 ou encore la chaîne de transmission 20.

Le mouvement des leviers 10 et 11 soulève l'élément intermédiaire 2 en le faisant passer au-dessus de l'élément arrière 3, comme indiqué sur la figure 2.

Le pivotement du levier 11 provoque le basculement du levier 16 grâce à la biellette 17, ce qui soulève l'élément avant 1 et pousse le doigt avant 15 de ce dernier dans la glissière 14 de l'élément 2.

L'élément avant 1 se superpose ainsi progressivement, en coulissant sur l'élément intermédiaire 2.

Le mouvement se poursuit ainsi jusqu'à ce que les éléments 1, 2, 3 soient rangés sensiblement horizontalement les uns sur les autres dans le coffre 5, comme montré par la figure 3.

## Revendications

1. Toit escamotable pour véhicule, comprenant un élément de toit avant (1), un élément de toit intermédiaire (2) et un élément de toit arrière (3), ces trois éléments étant mobiles entre une position dans laquelle, ils recouvrent l'habitacle (4) du véhicule et une position dans laquelle, ils sont superposés sensiblement horizontalement dans le coffre arrière (5) du véhicule, **caractérisé en ce que** le déplacement de l'élément arrière (3) vers le coffre est commandé par au moins un bras (6) articulé au châssis du véhicule et à l'élément arrière (3), **en ce que** l'avant (3b) de l'élément arrière (3) est relié de façon articulée à l'élément intermédiaire (2) par un premier levier (10), un second levier (11) reliant de façon articulée l'élément intermédiaire (2) à un point d'articulation fixe (13) du châssis, **en ce que** l'élément intermédiaire (2) comporte une glissière (14) s'étendant entre ses bords avant et arrière, un doigt (15) solidaire de l'arrière de l'élément avant (1) étant engagé dans ladite glissière (14) pour que l'élément avant (1) puisse coulisser sur l'élément intermédiaire (2), **en ce que** la partie avant de l'élément intermédiaire (2) est reliée de façon articulée à l'élément avant (1) par un levier (16), ce levier (16) étant lui-même relié de façon articulée audit second levier (11) par une biellette (17), et **en ce que** des moyens de liaison sont prévus entre le bras (6) et le second levier (11) ou entre le bras (6) et le premier levier (10) reliant l'élément arrière (3) à l'élément intermédiaire (2) ou entre le premier levier (10) et un point d'articulation fixe (18) du châssis.

2. Toit escamotable conforme à la revendication 1, **caractérisé en ce que** lesdits moyens de liaison comprennent une biellette (19) articulée au bras (6) et au second levier (11).

3. Toit escamotable conforme à la revendication 1, **caractérisé en ce que** lesdits moyens de liaison comprennent un levier (23) articulé au premier levier (10) reliant l'élément arrière (3) et l'élément intermédiaire (2) et articulé à un point d'articulation fixe (18) du châssis.

4. Toit escamotable conforme à la revendication 1 , **caractérisé en ce que** lesdits moyens de liaison comprennent une biellette (24) articulée au bras (6) et au premier levier (10) reliant les éléments arrière (3) et intermédiaire (2).

5. Toit escamotable conforme à la revendication 1, **caractérisé en ce que** lesdits moyens de liaison comprennent une chaîne (20) ou une courroie crantée enroulée autour de deux pignons (21, 22) montés sur les axes des points d'articulation (13,7) du second levier (11) et du bras (6) au châssis et solidaires de ceux-ci.

6. Toit escamotable conforme à la revendication 1, **caractérisé en ce que** le déplacement de l'élément arrière (3) vers le coffre (5) est en outre commandé par un doigt (25) porté par la partie arrière (3a) de l'élément arrière (3) engagé de façon coulissante dans une glissière (26) s'étendant à l'intérieur du coffre (5).

7. Toit escamotable conforme à la revendication 1,**caractérisé en ce que** le déplacement de l'élément arrière (3) vers le coffre (5) est en outre commandé par un bras articulé au châssis et à la partie arrière (3a) de l'élément arrière (3).

## Claims

1. Retractable roof for a vehicle, comprising a front roof element (1), a middle roof element (2) and a rear roof element (3), these three elements being mobile between a position in which they cover the passenger compartment (4) of the vehicle and a position in which they are stacked substantially horizontally in the rear boot (5) of the vehicle, **characterised in that** the movement of the rear element (3) towards the boot is controlled by means of at least one arm (6) connected to the chassis of the vehicle and to the rear element (3), **in that** the front (3b) of the rear element (3) is connected in an articulated fashion to the middle element (2) by means of a first lever (10), a second lever (11) connecting the middle element (2) in an articulated fashion to a fixed connection point (13) of the chassis, **in that** the middle element (2) includes a slide (14) that extends between its front and rear edges, a finger (15) solidly attached to the rear of the front element (1) being inserted in said slide (14) so that the front element (1) can slide over the middle element (2), **in that** the front part of the middle element (2) is connected in an articulated fashion to the front element (1) by means of a lever (16), this lever (16) in turn being connected in an articulated fashion to said second lever (11) by means of a small connecting rod (17), and **in that** linking means are provided between the arm (6) and the second lever (11) or between the arm (6) and the first lever (10) that connects the rear element (3) to the middle element (2) or between the first lever (10) and a fixed connection point (18) of the chassis.

2. Retractable roof according to claim 1, **characterised in that** said linking means comprise a small connecting rod (19) connected to the arm (6) and to the second lever (11).

3. Retractable roof according to claim 1, **characterised in that** said linking means comprise a lever (23) connected to the first lever (10) that connects the rear element (3) and the middle element (2) and connected to a fixed connection point (18) of the chassis.

4. Retractable roof according to claim 1, **characterised in that** said linking means comprise a small connecting rod (24) connected to the arm (6) and to the first lever (10) that connects the rear (3) and middle (2) elements.

5. Retractable roof according to claim 1, **characterised in that** said linking means comprise a chain (20) or a notched belt wound around two pinions (21, 22) mounted on the axes of the connection points (13, 7) of the second lever (11) and of the arm (6) to the chassis, and are solidly attached thereto.

6. Retractable roof according to claim 1, **characterised in that** the movement of the rear element (3) towards the boot (5) is also controller by a finger (25) supported by the rear part (3a) of the rear element (3) inserted so as to slide inside a slide (26) that extends into the boot (5).

7. Retractable roof according to claim 1, **characterised in that** the movement of the rear element (3) towards the boot (5) is also controlled by an arm connected to the chassis and to the rear part (3a) of the rear element (3).

## Patentansprüche

1. Ausfahrbares Dach eines Fahrzeugs mit einem vorderen Dachelement (1), einem mittleren Dachelement (2) und einem hinteren Dachelement (3), wobei diese drei Elemente zwischen einer Position mobil sind, in der sie die Insassenkabine (4) des Fahrzeugs abdecken, und einer Position, in der sie deutlich horizontal im hinteren Kofferraum (5) des Fahrzeugs übereinander gelagert sind, **dadurch gekennzeichnet, dass** die Verschiebung des hinteren Elements (3) zum Kofferraum durch wenigstens einen am Fahrgestell des Fahrzeugs und am hinteren Element (3) artikulierten Arm (6) gesteuert wird, dass der Vorderteil (3b) des hinteren Elements (3) artikuliert mit dem mittleren Element (2) durch einen ersten Hebel (10) verbunden ist, wobei ein zweiter Hebel (11) das mittlere Element (2) artikuliert mit einem festen Artikulationspunkt (13) des Fahrgestells verbindet, dass das mittlere Element (2) eine sich zwischen seinem vorderen und hinteren Rand erstreckende Gleitschiene (14) umfasst, wobei ein mit dem Hinterteil des vorderen Elements (1) fest befestigter Finger (15) in die genannte Gleitschiene (14) eingreift, damit das vordere Element (1) auf dem mittleren Element (2) gleiten kann, dass der vordere Teil des mittleren Elements (2) artikuliert mit dem vorderen Element (1) durch einen Hebel (16) verbunden ist, wobei dieser Hebel (16) seinerseits artikuliert mit dem genannten zweiten Hebel (11) durch eine Pleuelstange (17) verbunden ist, und dass Verbindungsmittel zwischen dem Arm (6) und dem zweiten Hebel (11) oder zwischen dem Arm (6) und dem das hintere Element (3) mit dem mittleren Element (2) verbindenden ersten Hebel (10) oder zwischen dem ersten Hebel (10) und einem festen Artikulationspunkt (18) des Fahrgestells vorgesehen sind.

2. Ausfahrbares Dach gemäß Anspruch 1, **dadurch gekennzeichnet, dass** die genannten Verbindungsmittel eine am Arm (6) und am zweiten Hebel (11) artikulierte Pleuelstange (19) umfassen.

3. Ausfahrbares Dach gemäß Anspruch 1, **dadurch gekennzeichnet, dass** die genannten Verbindungsmittel einen am das hintere Element (3) und das mittlere Element (2) verbindenden und an einem festen Artikulationspunkt (18) des Fahrgestells artikulierten ersten Hebel (10) artikulierten Hebel (23) umfassen.

4. Ausfahrbares Dach gemäß Anspruch 1, **dadurch gekennzeichnet, dass** die genannten Verbindungsmittel eine am Arm (6) und am das hintere (3) und das mittlere (2) Element verbindenden ersten Hebel (10) artikulierte Pleuelstange (24) umfassen.

5. Ausfahrbares Dach gemäß Anspruch 1, **dadurch gekennzeichnet, dass** die genannten Verbindungsmittel eine Kette (20) oder einen um zwei, auf den Achsen der Artikulationspunkte (13, 7) des zweiten Hebels (11) und des Arms (6) des Fahrgestells angebrachte und mit diesen fest verbundene Ritzel (21, 22) aufgerollten Zahnriemen umfassen.

6. Ausfahrbares Dach gemäß Anspruch 1, **dadurch gekennzeichnet, dass** die Verschiebung des hinteren Elements (3) zum Kofferraum (5) darüber hinaus durch einen vom hinteren Teil (3a) des gleitend in eine sich im Innern des Kofferraums (5) erstreckenden Gleitschiene (26) eingegriffenen hinteren Elements (3) getragenen Finger (25) gesteuert wird.

7. Ausfahrbares Dach gemäß Anspruch 1, **dadurch gekennzeichnet, dass** die Verschiebung des hinteren Elements (3) zum Kofferraum (5) darüber hinaus durch einen am Fahrgestell und am hinteren Teil (3a) des hinteren Elements (3) artikulierten Arm gesteuert wird.
